# EUROPÄISCHE PATENTSCHRIFT

(11) **EP 3 088 844 B1**
(45) Veröffentlichungstag und Bekanntmachung des Hinweises auf die Patenterteilung: **12.12.2018**
(21) Anmeldenummer: 16161957.2
(22) Anmeldetag: 23.03.2016
(51) Int. Cl.: G01C 19/72

(54) **FASEROPTISCHES SYSTEM UND VERFAHREN ZUR REDUKTION VON BIASFEHLERN IN EINEM SOLCHEN FASEROPTISCHEN SYSTEM**
FIBRE OPTICAL SYSTEM AND PROCESS FOR THE REDUCTION OF BIAS ERRORS IN SUCH A FIBRE OPTIC SYSTEM
SYSTEME A FIBRE OPTIQUE ET PROCEDE DE REDUCTION DES ERREURS DE DECALAGE DANS UN TEL SYSTEME A FIBRE OPTIQUE

(30) Priorität: 28.04.2015 DE 102015106550
(43) Veröffentlichungstag der Anmeldung: 02.11.2016
(73) Patentinhaber: Northrop Grumman LITEF GmbH, 79115 Freiburg (DE)
(72) Erfinder: DEPPE-REIBOLD, Olaf, 79312 Emmendingen (DE); Dr. SPAHLINGER, Günter, 70188 Stuttgart (DE)
(74) Vertreter: Müller Hoffmann & Partner

(56) Entgegenhaltungen:
- WO-A1-03/001153
- WO-A1-2016/156167

## Beschreibung

Die Erfindung betrifft ein faseroptisches System sowie ein Verfahren zur Reduktion von Biasfehlern in einem solchen faseroptischen System.

Sensoren für die Messung von Winkelgeschwindigkeiten, wie sie beispielsweise in Navigationssystemen oder Systemen zur Analyse oder Regelung von Bewegungen oder der Lage eines Objektes eingesetzt werden, können anstelle von mechanischen Gyroskopen auch interferometrische Faserkreisel (auch faseroptische Gyropskope oder Faserkreisel genannt) enthalten. Diese analysieren die Interferenz zweier gegenläufig in einem aufgerollten Lichtwellenleiter umlaufenden Lichtwellen, die sich durch eine Drehung des Lichtwellenleiters um eine Achse senkrecht zu der Ebene, in der er verlegt ist, durch die unterschiedliche Laufzeit der gegenläufigen Wellenzüge und die daraus resultierende Phasendifferenz ergibt. Die Größe der Intensitätsänderung des detektierten Lichts, die durch die Inteferometerkennlinie beschrieben wird, ist ein Maß für die am Kreisel anliegende Drehrate.

Die Interferometerkennlinie beschreibt also die Abhängigkeit der Lichtintensität, die als Beobachtungsgröße zur Bestimmung der Rotation dienen soll, von der Phasendifferenz der beiden Lichtwellen. Häufig wird der Arbeitspunkt des Faserkreisels derart auf der kosinusförmigen Interferometerkennlinie eingestellt, dass er im Punkt einer maximalen Steigung der Kennlinie, also etwa bei halber maximaler Lichtintensität, liegt. Somit soll bereits bei einer geringen Drehbewegung eine maximale Empfindlichkeit des Interferometers gewährleistet sein.

Ein solcher faseroptischer Kreisel umfasst prinzipiell eine Lichtquelle, die die umlaufenden Lichtwellen oder Lichtstrahlen erzeugt, einen aufgerollten Lichtwellenleiter (z.B. eine Faserspule), eine optische Vorrichtung zum Einspeisen der gegenläufigen Lichtstrahlen in die beiden Enden des aufgerollten Lichtwellenleiters und zum Empfangen der den aufgerollten Lichtwellenleiter passierten gegenläufigen Lichtstrahlen (auch Multifunktionaler integriertoptischer Chip (MIOC) genannt) sowie einen Detektor, der die Interferenz der gegenläufigen Wellenzüge bestimmt. Darüber hinaus kann ein Polarisator, der die von der Lichtquelle stammenden Lichtwellen polarisiert, und/oder ein optischer Koppler enthalten sein, der die Lichtstrahlen entweder von der Lichtquelle zur optischen Vorrichtung (zum aufgerollten Lichtwellenleiter) oder von der optischen Vorrichtung (vom aufgerollten Lichtwellenleiter) zum Detektor leitet. Des Weiteren umfasst ein Faserkreisel einen analogen Verstärker sowie eine Auswerteeinrichtung.

Bei Nutzung eines closed-loop-Verfahrens zum Betreiben des Gyroskops umfasst die Auswerteeinrichtung einen Analog/Digital-Wandler, einen Regelkreis, der ein Phasenrückstellsignal erzeugt, und einen Digital/Analog-Wandler, der ein aus dem Phasenrückstellsignal gewonnenes Modulationssignal einem Phasenmodulator in der optischen Vorrichtung bereitstellt, so dass die Phase der eingespeisten Lichtwellen so moduliert werden kann, dass die Intensität des detektierten Lichtes gleichbleibt, das heißt der Arbeitspunkt des Interferometers beibehalten wird. Dabei ist die Größe des notwendigen Phasenrückstellsignals ein Maß für die am Gyroskop anliegende Drehrate.

In einem solchen faseroptischen Gyroskop kann ein Biasfehler auftreten, der sich als Nullpunktsfehler des Gyroskops manifestiert. Damit wird auch in Ruhelage, das heißt während keine echte mechanische Eingangsdrehrate anliegt, eine Drehrate größer Null angezeigt oder ermittelt. Dies kann durch verschiedene Effekte verursacht werden. Ein bekannter Mechanismus ist die sogenannte Amplitudenmodulation an der optischen Vorrichtung, die ein parasitärer Effekt der auf der optischen Vorrichtung vorhandenen Phasenmodulatoren ist. Diese sollten idealerweise nur die Phase der Lichtwellen modulieren, verändern aber auch in geringem Maße die Amplitude und damit die Intensität des Lichtes. Darüber hinaus kann das elektrische Modulationssignal, das zur optischen Vorrichtung geführt wird, in den Detektorpfad eingestreut werden.

Die WO 03/001153 A1 beschreibt ein Verfahren zur Vermeidung von Bias-Fehlern aufgrund synchroner Einstreuung bei faseroptische Gyroskopen (FOGs), das vorsieht, ein im Abtasttakt periodisches Zusatzsignal, das z.B. einer synchronen Störsignalstreuung entspricht, in Form einer Zusatzmodulation zum Modulationssignal für einen Phasenmodulator innerhalb eines MIOCs zu addieren. Vorzugsweise wird das demodulierte Detektorsignal des FOGs dann mit der Zusatzmodulation korreliert, d.h. mit der Zusatzmodulation multipliziert und aufsummiert. Das aufsummierte, von der Fehlerabstimmung abhängige Signal steuert einen VCO, der die Arbeitsfrequenz des FOGs solange nachstimmt, bis die Korrelation zu Null wird. Das Verfahren lässt sich sowohl auf Phasenrampen-Modulation als auch auf FOGs anwenden, die nach einem Random-Phasenmodulationsverfahren arbeiten.

Die nachveröffentlichte WO 2016/156167 A1 offenbart ein Steuersystem für einen faseroptischen Kreisel mit einem Phasenmodulator zum Modulieren einer Phase eines Lichtsignals und eine Steuereinheit zum Erzeugen eines Steuersignals auf, um dessen Größe die Phase moduliert wird und das dem Phasenmodulator zugeführt wird. Dabei ändert sich das Steuersignal statistisch und ist mittelwertfrei.
Aufgabe der vorliegenden Erfindung ist es, ein Verfahren zur Reduktion dieses Biasfehlers in einem faseroptischen System sowie ein faseroptisches System, das geeignet ist, solch ein Verfahren auszuführen, bereitzustellen.
Diese Aufgabe wird gelöst durch die Gegenstände der unabhängigen Ansprüche. Bevorzugte Ausführungsformen finden sich in den Unteransprüchen.

Das erfindungsgemäße faseroptische System umfasst ein faseroptisches Gyroskop umfassend eine Lichtquelle, eine Faserspule, eine optische Vorrichtung mit einem Phasenmodulator, einen Photodetektor, einen Verstärker und eine Auswerteeinrichtung sowie eine Steuervorrichtung. Die optische Vorrichtung ist geeignet, einen aus der Lichtquelle stammenden Lichtstrahl mittels Strahlteilung zu teilen und die Phase von mindestens einem der erzeugten Lichtstrahlen zu modulieren und damit einen aktuellen Arbeitspunkt des faseroptischen Gyroskops einzustellen, die erzeugten Lichtstrahlen in zueinander entgegengesetzte Richtungen in die Faserspule einzustrahlen und die aus der Faserspule austretenden Lichtstrahlen wieder zu vereinigen. Der Photodetektor ist geeignet, aus einem bei der Wiedervereinigung der Lichtstrahlen entstehenden Interferenzsignal ein der Lichtintensität des Interferenzsignals entsprechendes Signal zu erzeugen, während der Verstärker geeignet ist, das im Photodetektor erzeugte Signal zu verstärken. Die Auswerteeinrichtung ist geeignet, mit Hilfe des vom Verstärker erzeugten Signals ein Modulationssignal zu erzeugen, das den Phasenmodulator so steuert, dass eine Rückstellung des Interferenzsignals gemäß dem aktuellen Arbeitspunkt des faseroptischen Gyroskops erreicht oder ein vorgegebener Wert als aktueller Arbeitspunkt des faseroptischen Gyroskops eingestellt wird. Darüber hinaus ist die Auswerteeinrichtung geeignet, auf der Basis des Modulationssignals eine Drehrate des faseroptischen Gyroskops zu bestimmen. Die Steuervorrichtung ist geeignet, mindestens ein Element des faseroptischen Gyroskops so zu steuern, dass mindestens zwei verschiedene Werte für die Drehrate durch die Auswerteeinrichtung bei nahezu gleicher am faseroptischen Gyroskop anliegender Drehrate ermittelt werden.

Durch einen Vergleich der mindestens zwei ermittelten Werte für die Drehrate wird der Biasfehler des faseroptischen Gyroskops bestimmt. Zusätzlich kann der Biasfehler durch eine Linearkombination der mindestens zwei ermittelten Werte für die Drehrate reduziert und ein korrigierter Wert für die am faseroptischen Gyroskop anliegende Drehrate erzeugt werden. Für diese Zwecke umfasst das faseroptische System weiterhin eine Verarbeitungseinheit. Zur Ermittlung der mindestens zwei verschiedenen Werte für die Drehrate bei nahezu gleicher am faseroptischen Gyroskop anliegender Drehrate können mindestens zwei verschiedene Arbeitspunkte des faseroptischen Gyroskops auf ein und derselben Interferometerkennlinie des faseroptischen Gyroskops eingestellt werden. Alternativ können mindestens zwei verschiedene Interferometerkennlinien des faseroptischen Gyroskops durch eine Veränderung der Verstärkung der Regelstrecke außerhalb der Auswerteeinrichtung eingestellt werden.

Mit Hilfe des beschriebenen Verfahrens und des beschriebenen faseroptischen Systems kann der Biasfehler unabhängig vom Alter des faseroptischen Gyroskops sowie von anderen äußeren Einflüssen reduziert
werden, da der Fehler kontinuierlich auf Grundlage der mindestens zwei verschiedenen ermittelten Werte für die Drehrate kompensiert wird. Damit haben beispielsweise die Alterung von Komponenten des faseroptischen Gyroskops oder Veränderungen in der Umgebungstemperatur einen wesentlich kleineren Einfluss auf die vom faseroptischen System ermittelte Drehrate verglichen mit Systemen, bei denen der Biasfehler nur in einem Kalibrierungsvorgang ermittelt und danach als konstanter Wert bei der Erzeugung der korrigierten Drehrate verwendet wird.

Ausführungsformen der vorliegenden Erfindung werden im Folgenden an Hand der Figuren näher erläutert, wobei gleichartige Elemente mit gleichen Bezugszeichen gekennzeichnet sind.
Die Figur 1 zeigt eine schematische Darstellung eines faseroptischen Systems gemäß der Erfindung in einer exemplarischen Form.
Die Figur 2 zeigt eine schematische Darstellung eines Verfahrens zum Betreiben eines faseroptischen Systems gemäß der Erfindung in einer exemplarischen Form.
Die Figur 3 zeigt eine schematische Darstellung eines Teils eines faseroptischen Systems gemäß einer ersten Ausführungsform der Erfindung.
Die Figur 4 zeigt eine schematische Darstellung eines faseroptischen Systems gemäß einer zweiten Ausführungsform der Erfindung.

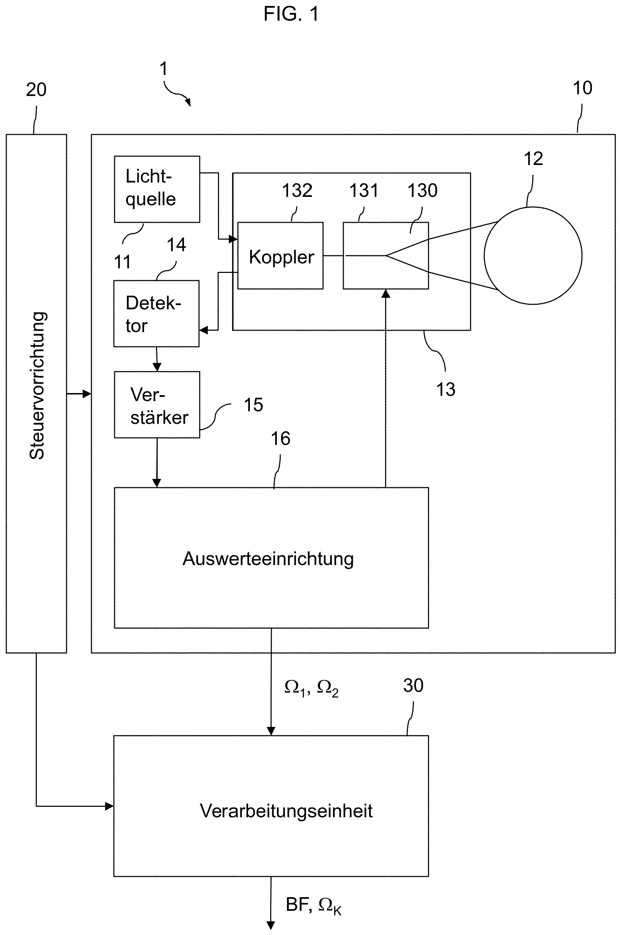

Das in Figur 1 dargestellte faseroptische System 1 umfasst ein faseroptisches Gyroskop 10, eine Steuervorrichtung 20 und eine Verarbeitungseinheit 30. Das faseroptische Gyroskop 10 umfasst eine Lichtquelle 11, eine Faserspule 12, eine optische Vorrichtung 13, einen Photodetektor 14, einen Verstärker 15 und eine Auswerteeinrichtung 16. Die Lichtquelle 11 ist dazu geeignet, Licht mit einer bestimmten Wellenlänge und einer bestimmten Lichtleistung auszustrahlen. Die Faserspule 12 besteht im Wesentlichen aus einer zu einer Spule aufgewickelten optischen Faser. Die optische Vorrichtung 13 weist einen Phasenmodulator 130 auf und ist dazu geeignet, einen aus der Lichtquelle stammenden Lichtstrahl mittels Strahlteilung zu teilen und die Phase von mindestens einem der erzeugten Lichtstrahlen zu verändern. Die so erzeugten und modulierten Lichtstrahlen werden anschließend in zueinander entgegengesetzte Richtungen in die Faserspule 12 eingestrahlt. Darüber hinaus ist die optische Vorrichtung 13 geeignet, die aus der Faserspule 12 austretenden Lichtstrahlen wieder zu vereinigen und ein Interferenzsignal zu erzeugen. Dieses Interferenzsignal wird von dem Photodetektor 14 in ein elektrisches Signal gewandelt, das Informationen über die Lichtintensität des Interferenzsignals enthält. Das erzeugte elektrische Signal wird im Verstärker 15 analog verstärkt und der Auswerteeinrichtung 16 zugeführt. Die optische Vorrichtung 13 kann bespielsweise einen Multifunktionalen integriert-optischen Chip (MIOC) 131 und einen Koppler 132 umfassen, wobei der MIOC 131 die Strahlteilung und Strahlvereinigung realisiert und den Phasenmodulator 130 enthält und wobei der Koppler 132 geeignet ist, die Lichtstrahlen von der Lichtquelle 11 zum MIOC 131 und vom MIOC 131 zum Photodetektor 14 zu leiten. Die einzelnen Funktionalitäten der optischen Vorrichtung 13 können auch in einem Bauteil oder in anderen, hier nicht genannten Bauteilen realisiert werden, wobei die Funktionalitäten auf die verschiedenen Bauteile in beliebiger Weise aufgeteilt sein können.

Die durch den Phasenmodulator 130 eingestellte Phasenmodulation bestimmt den aktuellen Arbeitspunkt des faseroptischen Gyroskops 10 auf einer durch Parameter der Komponenten des faseroptischen Gyroskops 10 festgelegten Interferometerkennlinie des faseroptischen Gyroskops 10. Solche, die Interferometerkennlinie bestimmende Parameter sind beispielsweise die Lichtleistung der Lichtquelle 11, eine durch die optische Vorrichtung 13 oder andere Komponenten des faseroptischen Gyroskops 10 verursachte Amplitudenmodulation des verwendeten Lichts, die Lichtempfindlichkeit des Photodetektors 14 oder die analoge Verstärkung des Verstärkers 15. Mit Hilfe der Interferometerkennlinie kann in der Auswerteeinrichtung 16 anhand des vom Verstärker erzeugten Signals eine am faseroptischen Gyroskop 10 anliegende Drehrate ermittelt werden. Im closed-loop-Betrieb des faseroptischen Gyroskops 10 enthält die Auswerteeinrichtung 16 einen Regelkreis, der ein Modulationssignal erzeugt, das geeignet ist, den Phasenmodulator 130 so zu steuern, dass eine Rückstellung des Interferenzsignals gemäß dem aktuellen Arbeitspunkt des faseroptischen Gyroskops 10 erreicht wird. Auf Basis der Größe der Abweichung des vom Verstärker erzeugten Signals vom durch den Arbeitspunkt des faseroptischen Gyroskops 10 vorgegebenen Signals beziehungsweise auf Basis der Größe des notwendigen Rückstellsignals ermittelt die Auswerteeinrichtung 16 die am faseroptischen Gyroskop 10 anliegende Drehrate. Darüber hinaus kann mit Hilfe eines veränderten Modulationssignals auch ein neuer aktueller Arbeitspunkt des faseroptischen Gyroskops 10 eingestellt werden.

Das faseroptische Gyroskop 10 weist einen Biasfehler BF auf, dessen Ursprung bereits vorstehend beschrieben wurde. Die Größe des Biasfehlers BF ist dabei abhängig von der Lage des Arbeitspunktes des faseroptischen Gyroskops auf der Interferometerkennlinie des faseroptischen Gyroskops sowie von den Kennwerten der Interferometerkennlinie des faseroptischen Gyroskops an sich, wobei insbesondere der Anstieg der Kennlinie im Arbeitspunkt, das heißt die Größe oder Verstärkung eines vom Arbeitspunkt der Kennlinie abweichenden Signals, von Bedeutung ist.

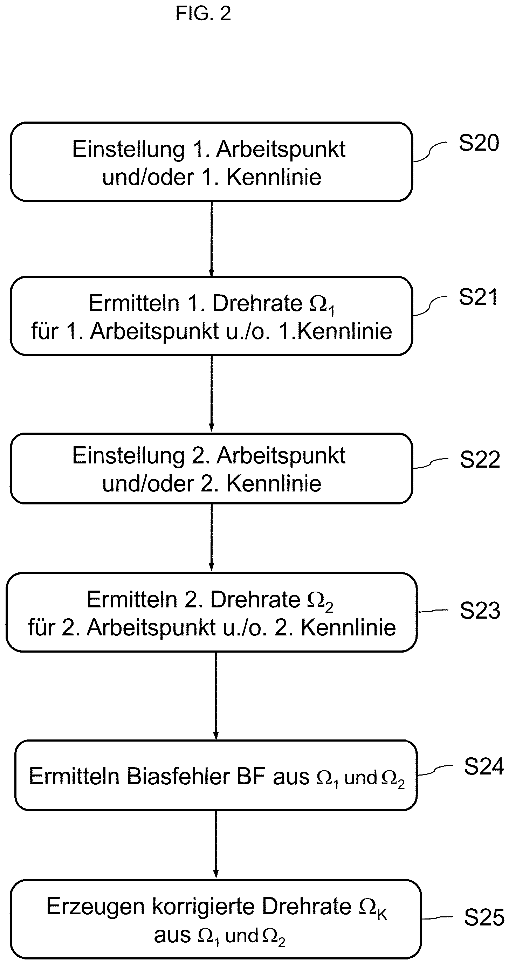

Diese Eigenschaften des Biasfehlers BF werden im erfindungsgemäßen Verfahren ausgenutzt, das in Figur 2 in einer exemplarischen Form dargestellt ist. Zunächst wird in Schritt S20 ein erster Arbeitspunkt auf einer gegebenen Interferometerkennlinie und/oder eine erste Interferometerkennlinie des faseroptischen Gyroskops 10 durch eine entsprechende Steuerung der Komponenten des faseroptischen Gyroskops 10 eingestellt. Die Steuerung wird durch die Steuervorrichtung 20, die in Figur 1 dargestellt ist, realisiert. Beispielsweise kann die Steuervorrichtung 20 die Auswerteeinrichtung 16 derart steuern, dass mit Hilfe des Modulationssignals ein erster Arbeitspunkt auf der Interferometerkennlinie des faseroptischen Gyroskops 10 eingestellt wird. Alternativ kann die Steuervorrichtung andere Komponenten des faseroptischen Gyroskops 10, beispielsweise die Lichtquelle 11 oder den Verstärker 15, derart steuern, dass eine erste Interferometerkennlinie des faseroptischen Gyroskops 10 eingestellt wird.

Für diesen ersten Arbeitspunkt beziehungsweise diese erste Interferometerkennlinie wird in Schritt S21 durch die Auswerteeinrichtung 16 eine erste Drehrate Ω₁ für die tatsächlich am faseroptischen Gyroskop 10 anliegende Drehrate Ω ermittelt.

Anschliessend steuert die Steuervorrichtung 20 die Komponenten des faseroptischen Gyroskops 10 derart, dass in Schritt S22 ein zweiter Arbeitspunkt auf der gegebenen Interferometerkennlinie des faseroptischen Gyroskops 10 oder eine zweite Interferometerkennlinie des faseroptischen Gyroskops 10 eingestellt wird. Es können auch sowohl der Arbeitspunkt, das heißt die am Phasenmodulator 130 erzeugte Phasenmodulation, als auch die Interferometerkennlinie neu eingestellt werden.

In Schritt S23 wird für diesen zweiten Arbeitspunkt beziehungsweise diese zweite Interferometerkennlinie durch die Auswerteeinrichtung 16 eine zweite Drehrate Ω₂ für die tatsächlich am faseroptischen Gyroskop 10 anliegende Drehrate Ω ermittelt.

Da die Änderung des Arbeitspunktes beziehungsweise der Interferometerkennlinie sowie die Ermittlung der Drehrate durch die Auswerteeinrichtung in einer sehr kurzen Zeitspanne erfolgt, während die am faseroptischen Gyroskop 10 anliegende Drehrate Ω sich nur vergleichsweise langsam ändert, korrespondieren sowohl die erste ermittelte Drehrate Ω₁ als auch die zweite ermittelte Drehrate Ω₂ zur nahezu gleichen, tatsächlich am faseroptischen Gyroskop 10 anliegenden Drehrate Ω. Das heißt, dass der Unterschied zwischen den beiden ermittelten Drehraten Ω₁ und Ω₂ auf die unterschiedliche Größe des Biasfehlers für die zugrundeliegenden Arbeitspunkte beziehungsweise Interferometerkennlinien zurückzuführen ist.

Damit ist es in Schritt S24 möglich, durch einen Vergleich der beiden ermittelten Drehraten Ω₁ und Ω₂ oder eine weitere Verarbeitung der beiden ermittelten Drehraten Ω₁ und Ω₂ den Biasfehler BF des faseroptischen Gyroskops 10 für einen spezifischen Arbeitspunkt auf einer spezifischen Interferometerkennlinie zu ermitteln. Darüber hinaus kann in Schritt S25 durch eine Linearkombination der beiden ermittelten Drehraten Ω₁ und Ω₂ ein korrigierter Wert Ω_{K} für die Drehrate erzeugt werden, der zu der tatsächlich am faseroptischen Gyroskop 10 anliegenden Drehrate Ω korrespondiert und einen reduzierten Biasfehler aufweist. Idealerweise kann der Biasfehler BF sogar vollständig kompensiert beziehungsweise beseitigt werden. Die Schritte S24 und S25 werden durch die in Figur 1 dargestellte Verarbeitungseinheit 30 ausgeführt.

In Figur 2 ist exemplarisch nur die Nutzung von zwei verschiedenen Arbeitspunkten auf einer gegebenen Interferometerkennlinie des faseroptischen Gyroskops beziehungsweise die Nutzung von zwei verschiedenen Interferometerkennlinien des faseroptischen Gyroskops dargestellt. Jedoch können auch weitere Arbeitspunkte beziehungsweise weitere Interferometerkennlinien eingestellt und für diese weitere Drehraten Ω₃ bis Ωₙ ermittelt werden. Auch die Nutzung eines Kontinuums von Arbeitspunkten und Interferometerkennlinien in einem entsprechenden Band von Parametern sowie die entsprechende Ermittlung von kontinuierlichen Werten Ωᵢ für die Drehrate sind möglich. Damit würden zwischen den Schritten S23 und S24 weitere Schritte zur Einstellung eines Arbeitspunktes und/oder einer Interferometerkennlinie sowie zur Ermittlung einer Drehrate für den eingestellten Arbeitspunkt beziehungsweise die eingestellte Interferometerkennlinie ausgeführt werden. Entsprechend würden sich die Schritte S24 und S25 dann auf mehr als zwei ermittelte Werte für die Drehrate beziehen, so dass die Größe des Biasfehlers BF und der korrigierte Wert Ω_{K} für die Drehrate aus mehreren oder allen der ermittelten Drehratenwerte Ωᵢ ermittelt beziehungsweise erzeugt werden.

Darüber hinaus können auch die Schritte S20 und S21 sowie S22 und S23 mehrmals hintereinander ausgeführt werden, so dass mehrere Werte für die erste Drehrate Ω₁ und mehrere Werte für die zweite Drehrate Ω₂ ermittelt werden, die anschließend zur Erzeugung der in den Schritten S24 und S25 genutzten Drehratenwerte Ω₁ und Ω₂ gemittelt werden. Dabei sollten die Schritte zum Einstellen der verschiedenen Arbeitspunkte beziehungsweise der verschiedenen Interferometerkennlinien und zum Ermitteln der entsprechenden dazugehörenden Drehratenwerte Ωᵢ alternierend oder - bei mehr als zwei Arbeitspunkten beziehungsweise Interferometerkennlinien - in einer vorgegebenen Abfolge ausgeführt werden, die es ermöglicht einen spezifischen ermittelten Drehratenwert Ωᵢ einem spezifischen Arbeitspunkt beziehungsweise einer spezifischen Interferometerkennlinie zuzuordnen.

Der Schritt S24 ist optional. Er kann beispielsweise lediglich während einer Kalibrations- oder Testphase des faseroptischen Gyroskops ausgeführt werden, um die Güte des faseroptischen Gyroskops anhand festgelegter Limits für den Biasfehler zu beurteilen. Der ermittelte Biasfehler BF kann anschliessend abgespeichert und/oder für weitere Verarbeitungsschritte genutzt werden.

Als Beispiele für die in Schritt S25 ausgeführte Linearkombination der ermittelten Drehratenwerte Ωᵢ seien hier nur die Bildung von (gewichteten) Differenzen oder Mittelwerten genannt. Jedoch sind auch andere Linearkombinationen möglich.

Die in Figur 1 als separate Komponente des faseroptischen Systems 1 dargestellte Steuervorrichtung 20 und die ebenso dargestellte Verarbeitungseinheit 30 können auch - zumindest teilweise - in Komponenten des faseroptischen Gyroskops 10 integriert sein. Beispielsweise können Funktionalitäten der Steuervorrichtung 20 und/oder Teile der Verarbeitungseinheit 30 innerhalb der Auswerteeinrichtung 16 realisiert werden. Andererseits ist es auch möglich, dass die Steuervorrichtung 20 und/oder die Verarbeitungseinheit 30 oder zumindest Teile dieser Komponenten örtlich getrennt von den Komponenten des faseroptischen Gyroskops 10, beispielsweise in einem Rechner, angeordnet sind.

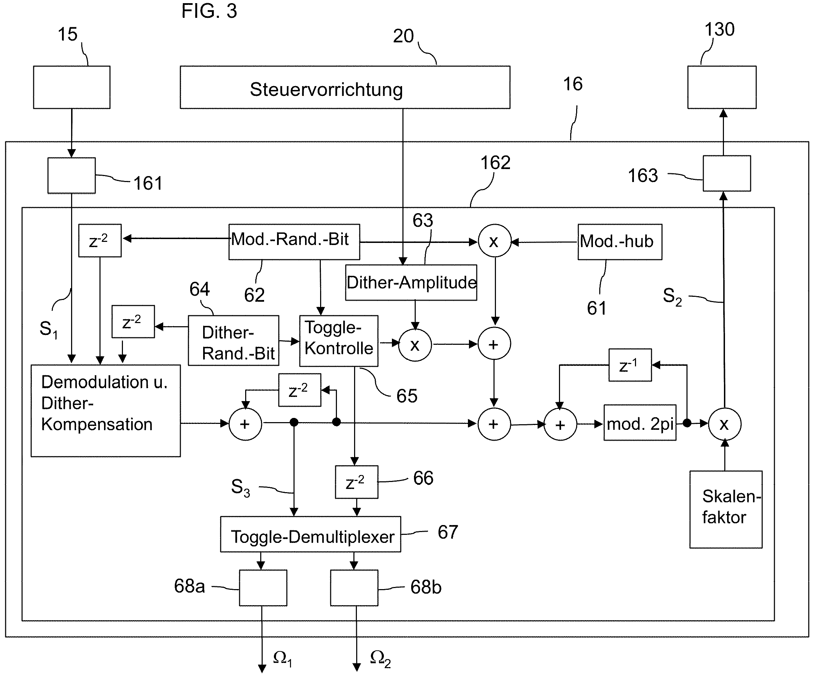

Die Figur 3 zeigt eine schematische Darstellung der Auswerteeinrichtung 16 einer ersten Ausführungsform des erfindungsgemäßen faseroptischen Systems sowie einige weitere Komponenten des faseroptischen Systems 1 zum besseren Verständnis. Dabei umfasst die Auswerteeinrichtung 16 des faseroptischen Gyroskops 10 einen Analog/Digital-Wandler 161, der das analoge vom Verstärker 15 erzeugte Signal in ein erstes digitales Signal S₁ umwandelt, einen Regelkreis 162, der auf der Basis des ersten digitalen Signals S₁ ein zweites digitales Signal S2 und ein drittes digitales Signal S₃ erzeugt, und einen Digital/Analog-Wandler 163, der das zweite digitale Signal S₂ in ein analoges Modulationssignal umwandelt, das den Phasenmodulator 130 so steuert, dass eine Rückstellung des Interferenzsignals gemäß dem aktuellen Arbeitspunkt des faseroptischen Gyroskops 10 oder die Einstellung eines neuen Arbeitspunktes des faseroptischen Gyroskops 10 auf der Interferometerkennlinie des faseroptischen Gyroskops 10 erreicht wird.

Der Regelkreis 162 umfasst verschiedene Komponenten, wie beispielsweise Addierer, Multiplizierer und Totzeitglieder, die einer entsprechenden Verarbeitung der anliegenden Signale dienen und die teilweise Signale von Hilfsregelkreisen erhalten, die in dem in Figur 3 dargestellten Regelkreis 162 zur besseren Übersichtlichkeit und Veranschaulichung der für die Umsetzung des erfindungsgemäßen Verfahrens notwendigen Komponenten nicht gezeigt, dem Fachmann aber bekannt sind. Der Regelkreis 162 umfasst Komponenten zur Demodulation und Ditherkompensation im ersten digitalen Signal S₁, eine Einheit 61 zur Erzeugung eines Modulationshubs, eine Einheit 62 zur Erzeugung eines Modulations-Random-Bits, eine Einheit 63 zur Erzeugung einer Dither-Amplitude sowie eine Einheit 64 zur Erzeugung eines Dither-Random-Bits. Darüber hinaus umfasst der Regelkreis 162 Komponenten zur Erzeugung des zweiten digitalen Signals S₂ und des dritten digitalen Signals S₃. Das dritte digitale Signal S₃ entspricht dem im zugeordneten Arbeitstakt ermittelten Drehratenwert Ωᵢ. Der Regelkreis 162 der ersten Ausführungsform des erfindungsgemäßen faseroptischen Systems umfasst weiterhin eine Toggle-Kontrolleinheit 65, ein Totzeitglied 66 und eine Toggle-Demultiplexer-Einheit 67.

Die Einheit 61 zur Erzeugung des Modulationshubs kann beispielsweise einen Modulationshub von *π*/2 erzeugen, welcher einem der üblichen Arbeitspunkte auf der Interferometerkennlinie entspricht.

Die Einheit 63 zur Erzeugung der Dither-Amplitude kann durch die Steuervorrichtung 20 derart mittels eines Steuersignals gesteuert werden, dass sie mindestens zwei verschiedene Werte der Dither-Amplitude erzeugt. Beispielsweise kann eine erste Amplitude mit dem Wert (*π*/2)/256, die der Standardamplitude entspricht, und eine zweite, stark erhöhte Amplitude mit beispielsweise dem Wert von 70·(*π*/2)/256 eingestellt werden. Da das Dither-Signal mit der eingestellten Dither-Amplitude zur Erzeugung des zweiten digitalen Signals S₂, das nach der Digital/Analog-Wandlung dem Modulationssignal entspricht, dient, können damit verschiedene Arbeitspunkte des faseroptischen Gyroskops 10 auf der Interferometerkennlinie des faseroptischen Gyroskops 10 eingestellt werden.

Um die Drehrateninformation aus den verschiedenen Arbeitspunkten des faseroptischen Gyroskops 10 getrennt und den entsprechenden Arbeitspunkten zugeordnet auswerten zu können, werden das Modulations-Random-Bit und das Dither-Random-Bit in der Toggle-Kontrolleinheit 65 durch eine XOR-Logik verknüpft. Damit kann sichergestellt werden, dass eine streng von Takt zu Takt alternierende beziehungsweise eine vorgegebene Abfolge aufweisende Folge von Arbeitspunkten eingestellt sowie von Drehratenwerten Ωᵢ erzeugt und diese dem jeweils zugehörigen Arbeitspunkt zugeordnet werden kann. Dazu wird durch die XOR-Verknüfung des Modulations-Random-Bits und des Dither-Random-Bits festgestellt, auf welchem der festgelegten Niveaus der Arbeitspunkt im nächsten Takt liegen würde. Wird bei einem Vergleich dieses Niveaus mit dem Arbeitspunktniveau des vergangengen Modulationstaktes eine Gleichheit festgestellt, so kann durch eine Invertierung des Dither-Random-Bits eine alternierende Abfolge der Arbeitspunkte erreicht werden. Sollen mehr als zwei verschiedene Arbeitspunkte eingestellt werden, so wird die Toggle-Kontrolleinheit 65 entsprechend ausgestaltet.

Mit dem Signal aus der Toggle-Kontrolleinheit 65 wird nach Durchlaufen eines entsprechenden Totzeitgliedes 66 (in Figur 3 ist ein z⁻²-Totzeitglied dargestellt, wobei sich die Anzahl der Totzeiten aus der realen Implementierung eines solchen Systems ergibt und z.B. durch die Rechenzeit in der Auswerteeinheit und den Zeiten, die zum Lesen und Schreiben der Wandler benötigt werden, gegeben ist) ein Toggle-Demultiplexer 67 betrieben, der die in einem spezifischen Takt ermittelten Drehratenwerte Ωᵢ einem spezifischen Arbeitspunktniveau zuordnet. Die ein und demselben Arbeitspunktniveau zugeordneten Drehratenwerte Ωᵢ bzw. die entsprechenden dritten digitalen Signale S₃ werden in einem jeweiligen Integrator 68 gemittelt und als Drehratenwerte ausgegeben. In Figur 3 ist der Regelkreis für die Nutzung von zwei verschiedenen Arbeitspunkten dargestellt, so dass zwei Integratoren 68a und 68b zur Erzeugung der gemittelten ersten Drehrate Ω₁ und der gemittelten zweiten Drehrate Ω₂ gezeigt sind. Die erste Drehrate Ω₁ und die zweite Drehrate Ω₂ werden anschließend in der Verarbeitungseinheit 30 zum Ermitteln des Biasfehlers BF und/oder zum Erzeugen der korrigierten Drehrate Ω_{K} genutzt, wie dies mit Bezug auf Figur 1 erläutert wurde.

In Figur 3 ist dargestellt, dass die Einheit 63 zur Erzeugung der Dither-Amplitude so durch die Steuervorrichtung 20 gesteuert wird, dass eine oder mehr verschiedene Dither-Amplituden erzeugt werden, wobei bei Verwendung einer konstanten Ditheramplitude deren Vorzeichen variabel ist. Alternativ oder zusätzlich kann die Steuervorrichtung 20 auch die Einheit 61 zur Erzeugung des Modulationshubs steuern, so dass beispielsweise neben dem gewöhnlich genutzten Modulationshub von *π*/2 auch ein Modulationshub von *π*/4 oder von 3/4·*π* erzeugt werden kann.

Die Ausgestaltung der Totzeitglieder kann an die Anzahl der Arbeitspunkte und die Arbeitsgeschwindigkeit der im faseroptischen Gyroskop 10 enthaltenen Komponenten angepasst werden. So können auch andere Verzögerungen als die dargestellte Verzögerung von 2 Takten durch entsprechende Totzeitglieder realisiert werden.

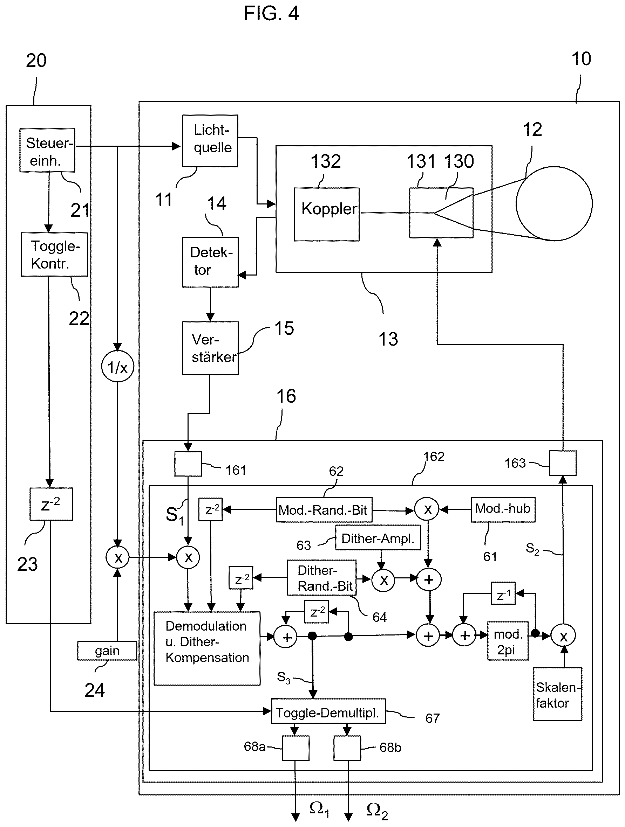

In Figur 4 ist eine zweite Ausführungsform des faseroptischen Systems gemäß der Erfindung schematisch dargestellt. Dabei werden im Gegensatz zur ersten Ausführungsform nicht Komponenten der Auswerteeinrichtung 16 derart gesteuert, dass verschiedene Arbeitspunkte auf ein und derselben Interferometerkennlinie des faseroptischen Gyroskops 10 eingestellt und damit verschiedene Drehratenwerte für eine nahezu gleiche am faseroptischen Gyroskop 10 anliegende Drehrate ermittelt werden, sondern es werden verschiedene Interferometerkennlinien für das faseroptische Gyroskop 10 erzeugt und mit deren Hilfe verschiedene Drehratenwerte für eine nahezu gleiche am faseroptischen Gyroskop 10 anliegende Drehrate ermittelt. Dazu wird durch die Steuervorrichtung 20 mindestens ein Element aus der Gruppe umfassend die Lichtquelle 11, , die optische Vorrichtung 13, den Photodetektor 14 und den Verstärker 15 gesteuert, wodurch eine Modulation der Verstärkung bzw. der Intensität des Interferenzsignals beziehungsweise des daraus im Photodetektor 14 erzeugten Signals erreicht wird. Um die Gesamtverstärkung des Regelkreises konstant zu halten ist es bei diesem Verfahren notwendig die Modulation der Verstärkung auf der analogen Wegstrecke, also zwischen Digital/Analog und Analog/Digitalwandler durch eine inverse Modulation des digitalen gains 24 auszugleichen. Dieser Pfad zur Steuerung des digitalen gains 24 ist ebenfalls in Fig. 4 gezeigt. Der Wert für den digitalen gain 24 kann entweder das Ergebnis eines Hilfsregelkreises sein, der laufend den korrekten Wert ermittelt oder aber durch Konfigurationskonstanten eingestellt werden. Die Auswerteeinrichtung 16 umfasst ähnliche Komponenten wie in der ersten Ausführungsform mit einigen wenigen Änderungen, die im folgenden erläutert werden.

In Figur 4 ist beispielsweise die Steuerung der Lichtquelle 11 durch die Steuervorrichtung 20 dargestellt. Dabei kann der Lichtquellenstrom so moduliert werden, dass zwei verschiedene Lichtleistungen der Lichtquelle und damit zwei verschiedene Interferometerkennlinien des faseroptischen Gyroskops 10 eingestellt werden, wodurch bei gleicher Phasenmodulation durch den Phasenmodulator 130 eine erste Drehrate Ω₁ und eine zweite Drehrate Ω₂ durch die Auswerteeinrichtung 16 erzeugt werden. Auch hier sind mehrere verschiedene Werte für den Lichtquellenstrom und damit mehrere verschiedene Interferometerkennlinien sowie die dazugehörigen Drehratenwerte Ω₁ bis Ωₙ oder ein quasi-kontinuierlicher Bereich der Lichtquellenstromwerte und der resultierenden Drehratenwerte möglich.

Zur Einstellung der verschiedenen Lichtquellenstromwerte sowie die Zuordnung des ermittelten dritten digitalen Signals S₃ beziehungsweise der ermittelten Drehratenwerte zu einer spezifischen Interferometerkennlinie umfasst die Steuervorrichtung 20 neben einer Steuereinheit 21, die ein Signal zur Einstellung des jeweiligen Lichtquellenstroms in der Lichtquelle 11 bereitstellt, eine Toggle-Kontrolleinheit 22 und ein Totzeitglied 23. Die Toggle-Kontrolleinheit 22 dient der Einstellung einer vorgegebenen Abfolge von einzustellenden Interferometerkennlinien des faseroptischen Gyroskops 10, ähnlich wie dies bereits mit Bezug auf die Einstellung einer vorgegebenen Abfolge von einzustellenden Arbeitspunkten bezüglich der ersten Ausführungsform in Figur 3 beschrieben wurde.

Mit dem Signal aus der Toggle-Kontrolleinheit 22 wird nach Durchlaufen eines der Implementierung angepassten Totzeitgliedes 23 ein Toggle-Demultiplexer 67 in der Auswerteeinrichtung 16 betrieben, der die ermittelten Drehratenwerte Ωᵢ einer spezifischen Interferometerkennlinie zuordnet. Die ein und derselben Interferometerkennlinie zugeordneten Drehratenwerte Ωᵢ beziehungsweise die entsprechenden dritten digitalen Signale S₃ werden in einem jeweiligen Integrator 68 gemittelt und als Drehratenwerte ausgegeben. In Figur 4 ist der Regelkreis für die Nutzung von zwei verschiedenen Interferometerkennlinien dargestellt, so dass zwei Integratoren 68a und 68b zur Erzeugung der gemittelten ersten Drehrate Ω₁ und der gemittelten zweiten Drehrate Ω₂ gezeigt sind. Die erste Drehrate Ω₁ und die zweite Drehrate Ω₂ werden anschließend in der Verarbeitungseinheit 30 zum Ermitteln des Biasfehlers BF und/oder zum Erzeugen der korrigierten Drehrate Ω_{K} genutzt, wie dies mit Bezug auf Figur 1 erläutert wurde.

Im Gegensatz zum in Figur 3 dargestellten Regelkreis 162 der ersten Ausführungsform weist der Regelkreis 162 für die zweite Ausführungsform keine Verknüpfung von Modulations-Random-Bit und Dither-Random-Bit durch eine Toggle-Kontrolleinheit auf. Damit werden das Dither-Random-Bit und die Dither-Amplitude ohne Abstimmung mit dem Modulations-Random-Bit verknüpft. Auch werden weder die Einheit 61 zur Erzeugung des Modulationshubs noch die Einheit 63 zur Erzeugung der Dither-Amplitude durch die Steuervorrichtung 20 derart gesteuert, dass verschiedene Arbeitspunkte des faseroptischen Gyroskops durch eine Änderung der eingestellten Phasenmodulation erzeugt werden.

In Figur 4 ist dargestellt, dass die Lichtquelle 11 so durch die Steuervorrichtung 20 gesteuert wird, dass zwei oder mehr verschiedene Interferometerkennlinien erzeugt werden. Alternativ kann die Steuervorrichtung 20 auch bespielsweise die analoge Verstärkung des Verstärkers 15 steuern, so dass beispielsweise neben einer gewöhnlich genutzten Interferometerkennlinie des faseroptischen Gyroskops 10, die durch eine erste Verstärkung des durch den Photodetektor 14 erzeugten Signals eingestellt wird, auch eine zweite Interferometerkennlinie des faseroptischen Gyroskops 10, die durch eine zweite Verstärkung des durch den Photodetektor 14 erzeugten Signals eingestellt wird, genutzt werden kann.

Auch die alternative oder zusätzliche Steuerung anderer Komponenten des faseroptischen Gyroskops 10 sind möglich.

Möglich ist weiterhin die Kombination der ersten und der zweiten Ausführungsform des faseroptischen Systems und des Verfahrens zum Betreiben des faseroptischen Systems. Mit anderen Worten: Es können sowohl Komponenten des Regelkreises 162 zur Einstellung verschiedener Arbeitspunkte des faseroptischen Gyroskops 10 als auch andere Komponenten des faseroptischen Gyroskops 10 zur Einstellung verschiedener Interferometerkennlinien des faseroptischen Gyroskops 10 gleichzeitig oder zeitversetzt gesteuert werden.

## Patentansprüche

1. Faseroptisches System (1) umfassend:
ein faseroptisches Gyroskop (10) umfassend:
eine Lichtquelle (11),
eine Faserspule (12),
eine optische Vorrichtung (13) mit einem Phasenmodulator (130), die geeignet ist, einen aus der Lichtquelle (11) stammenden Lichtstrahl mittels Strahlteilung zu teilen und die Phase von mindestens einem der erzeugten Lichtstrahlen zu modulieren und damit einen aktuellen Arbeitspunkt des faseroptischen Gyroskops (10) einzustellen, die erzeugten Lichtstrahlen in zueinander entgegengesetzte Richtungen in die Faserspule (12) einzustrahlen und die aus der Faserspule (12) austretenden Lichtstrahlen wieder zu vereinigen,
einen Photodetektor (14), der geeignet ist, aus einem bei der Wiedervereinigung der Lichtstrahlen entstehenden Interferenzsignal ein der Lichtintensität des Interferenzsignals entsprechendes Signal zu erzeugen,
einen Verstärker (15), der geeignet ist, das im Photodetektor (14) erzeugte Signal zu verstärken, und
eine Auswerteeinrichtung (16), die geeignet ist, mit Hilfe des vom Verstärker (15) erzeugten Signals ein Modulationssignal zu erzeugen, das den Phasenmodulator (130) so steuert, dass eine Rückstellung des Interferenzsignals gemäß dem aktuellen Arbeitspunkt des faseroptischen Gyroskops (10) erreicht oder ein vorgegebener Wert als aktueller Arbeitspunkt des faseroptischen Gyroskops (10) eingestellt wird, und auf der Basis des Modulationssignals eine Drehrate des faseroptischen Gyroskops (10) zu bestimmen, und
eine Steuervorrichtung (20), die geeignet ist, mindestens ein Element des faseroptischen Gyroskops (10) so zu steuern, dass mindestens zwei verschiedene Werte (Ω₁, Ω₂) für die Drehrate durch die Auswerteeinrichtung (16) bei nahezu gleicher am faseroptischen Gyroskop (10) anliegender Drehrate ermittelt werden, wobei
das System weiterhin eine Verarbeitungseinheit (30) umfasst, die geeignet ist, die Größe des Biasfehlers (BF) des faseroptischen Gyroskops (10) durch den Vergleich der mindestens zwei ermittelten Werte (Ω₁, Ω₂) für die Drehrate zu ermitteln.

2. Faseroptisches System nach Anspruch 1,
**dadurch gekennzeichnet, dass**
das System weiterhin eine Verarbeitungseinheit (30) umfasst, die geeignet ist, den Biasfehler (BF) des faseroptischen Gyroskops (10) durch eine Linearkombination der mindestens zwei ermittelten Werte (Ω₁, Ω₂) für die Drehrate zu reduzieren und einen korrigierten Wert (Ωₖ) für die am faseroptischen Gyroskop (10) anliegende Drehrate zu erzeugen.

3. Faseroptisches System nach einem der Ansprüche 1 bis 2,
**dadurch gekennzeichnet, dass**
die Steuervorrichtung (20) geeignet ist, die Auswerteeinrichtung (16) so zu steuern, dass mindestens zwei verschiedene Arbeitspunkte des faseroptischen Gyroskops (10) durch eine entsprechende Steuerung des Phasenmodulators (130) eingestellt werden.

4. Faseroptisches System nach Anspruch 3,
**dadurch gekennzeichnet, dass**
die Auswerteeinrichtung (16) umfasst:
eine Einheit (63) zur Erzeugung einer Dither-Amplitude, die geeignet ist, mindestens zwei verschiedene Werte der Dither-Amplitude entsprechend eines Signals von der Steuervorrichtung (20) einzustellen,
eine Toggle-Kontrolleinheit (65), die geeignet ist, die Werte der Arbeitspunkte des faseroptischen Gyroskops (10) in aufeinanderfolgenden Takten zu bestimmen und so zu steuern, dass diese Werte eine vorgegebene Abfolge aufweisen, und
eine Toggle-Demultiplexer-Einheit (67), die geeignet ist, den in einem spezifischen Takt für die Drehrate ermittelten Wert einem der mindestens zwei verschiedenen Arbeitspunkte des faseroptischen Gyroskops (10) zuzuordnen.

5. Faseroptisches System nach Anspruch 3,
**dadurch gekennzeichnet, dass**
die Auswerteeinrichtung (16) umfasst:
eine Einheit (61) zur Erzeugung eines Modulationshubs, die geeignet ist, mindestens zwei verschiedene Werte des Modulationshubs entsprechend eines Signals von der Steuervorrichtung (20) einzustellen,
eine Toggle-Kontrolleinheit (65), die geeignet ist, die Werte der Arbeitspunkte des faseroptischen Gyroskops (10) in aufeinanderfolgenden Takten zu bestimmen und so zu steuern, dass diese Werte eine vorgegebene Abfolge aufweisen, und
eine Toggle-Demultiplexer-Einheit (67), die geeignet ist, den in einem spezifischen Takt für die Drehrate ermittelten Wert einem der mindestens zwei verschiedenen Arbeitspunkte des faseroptischen Gyroskops zuzuordnen.

6. Faseroptisches System nach einem der Ansprüche 1 bis 2,
**dadurch gekennzeichnet, dass**
die Steuervorrichtung (20) geeignet ist, mindestens ein Element aus der Gruppe umfassend die Lichtquelle (11), die optische Vorrichtung (13) mit dem Phasenmodulator (130), den Photodetektor (14) und den Verstärker (15) so zu steuern, dass mindestens zwei verschiedene Interferometerkennlinien des faseroptischen Gyroskops (10) durch eine entsprechende Steuerung des Elements eingestellt werden.

7. Faseroptisches System nach Anspruch 6,
**dadurch gekennzeichnet, dass**
die Steuervorrichtung (20) geeignet ist, mindestens zwei verschiedene Leistungen der Lichtquelle (11) einzustellen,
die Steuervorrichtung (20) eine Toggle-Kontrolleinheit (22) umfasst, die geeignet ist, die Werte der Lichtquellenleistung des faseroptischen Gyroskops (10) in aufeinanderfolgenden Takten zu bestimmen und so zu steuern, dass diese Werte eine vorgegebene Abfolge aufweisen, und
die Auswerteeinrichtung (16) eine Toggle-Demultiplexer-Einheit (67) umfasst, die geeignet ist, den in einem spezifischen Takt für die Drehrate ermittelten Wert einer der mindestens zwei verschiedenen Interferometerkennlinien des faseroptischen Gyroskops (10) zuzuordnen.

8. Faseroptisches System nach Anspruch 6,
**dadurch gekennzeichnet, dass**
die Steuervorrichtung (20) geeignet ist, mindestens zwei verschiedene analoge Verstärkungen des Verstärkers (15) einzustellen,
die Steuervorrichtung (20) eine Toggle-Kontrolleinheit (22) umfasst, die geeignet ist, die Werte der analogen Verstärkung des faseroptischen Gyroskops (10) in aufeinanderfolgenden Takten zu bestimmen und so zu steuern, dass diese Werte eine vorgegebene Abfolge aufweisen, und
die Auswerteeinrichtung (16) eine Toggle-Demultiplexer-Einheit (67) umfasst, die geeignet ist, den in einem spezifischen Takt für die Drehrate ermittelten Wert einer der mindestens zwei verschiedenen Interferometerkennlinien des faseroptischen Gyroskops (10) zuzuordnen.

9. Verfahren zum Betreiben eines faseroptischen Systems (1) mit einem faseroptischen Gyroskop (10) umfassend eine Lichtquelle (11), eine Faserspule (12), eine optischen Vorrichtung (13) mit einem Phasenmodulator (130), einen Photodetektor (14), einen Verstärker (15) und eine Auswerteeinrichtung (16), bei dem
zwei aus der Lichtquelle (11) stammende und durch die optische Vorrichtung (13) mittels Strahlteilung erzeugte Lichtstrahlen in zueinander entgegengesetzten Richtungen in die Faserspule (12) eingestrahlt und anschließend wiedervereinigt werden, wobei mittels des Phasenmodulators (130) die Phase von mindestens einem der erzeugten Lichtstrahlen vor der Einstrahlung in die Faserspule (12) moduliert und damit ein aktueller Arbeitspunkt des faseroptischen Gyroskops (10) eingestellt wird,
der Photodetektor (14) mit dem aus der Wiedervereinigung der Lichtstrahlen entstehenden Interferenzsignal beaufschlagt wird, wobei durch den Photodetektor (14) ein der Lichtintensität des Interferenzsignals entsprechendes Signal erzeugt wird,
das im Photodetektor (14) erzeugte Signal im Verstärker (15) verstärkt wird, mit Hilfe des vom Verstärker (15) erzeugten Signals in der Auswerteeinrichtung (16) ein Modulationssignal erzeugt wird, das den Phasenmodulator (130) so steuert, dass eine Rückstellung des Interferenzsignals gemäß dem aktuellen Arbeitspunkt des faseroptischen Gyroskops (10) erreicht wird, und
auf der Basis des Modulationssignals in der Auswerteeinrichtung (16) eine Drehrate des faseroptischen Gyroskops (10) bestimmt wird, wobei
das faseroptische Gyroskop (10) so betrieben wird, dass mindestens zwei verschiedene Werte (Ω₁, Ω₂) für die Drehrate durch die Auswerteeinrichtung (16) bei nahezu gleicher am faseroptischen Gyroskop (10) anliegender Drehrate ermittelt werden, und
die Größe des Biasfehlers (BF) des faseroptischen Gyroskops (10) durch den Vergleich der mindestens zwei ermittelten Werte (Ω₁, Ω₂) für die Drehrate ermittelt wird.

10. Verfahren nach Anspruch 9,
**dadurch gekennzeichnet, dass**
der Biasfehler (BF) des faseroptischen Gyroskops (10) durch eine Linearkombination der mindestens zwei ermittelten Werte (Ω₁, Ω₂) für die Drehrate reduziert und ein korrigierter Wert (Ωₖ) für die am faseroptischen Gyroskop (10) anliegende Drehrate erzeugt wird.

11. Verfahren nach einem der Ansprüche 9 bis 10,
**dadurch gekennzeichnet, dass**
die mindestens zwei verschiedenen Werte (Ω₁, Ω₂) für die Drehrate dadurch erhalten werden, dass mindestens zwei verschiedene Arbeitspunkte des faseroptischen Gyroskops (10) durch eine entsprechende Steuerung des Phasenmodulators (130) eingestellt werden.

12. Verfahren nach Anspruch 11,
**dadurch gekennzeichnet, dass**
die Auswerteeinrichtung (16) eine Einheit (63) zur Erzeugung einer Dither-Amplitude umfasst,
die mindestens zwei verschiedenen Arbeitspunkte des faseroptischen Gyroskops (10) durch mindestens zwei verschiedene Werte der Dither-Amplitude eingestellt werden, wobei die Werte der Arbeitspunkte des faseroptischen Gyroskops (10) in aufeinanderfolgenden Takten so eingestellt werden, dass diese Werte eine vorgegebene Abfolge aufweisen, und
der in einem spezifischen Takt für die Drehrate ermittelte Wert einem der mindestens zwei verschiedenen Arbeitspunkte des faseroptischen Gyroskops (10) zugeordnet wird.

13. Verfahren nach Anspruch 11,
**dadurch gekennzeichnet, dass**
die Auswerteeinrichtung (16) eine Einheit (61) zur Erzeugung eines Modulationshubs umfasst,
die mindestens zwei verschiedenen Arbeitspunkte des faseroptischen Gyroskops (10) durch mindestens zwei verschiedene Werte des Modulationshubs eingestellt werden, wobei die Werte der Arbeitspunkte des faseroptischen Gyroskops (10) in aufeinanderfolgenden Takten so eingestellt werden, dass diese Werte eine vorgegebene Abfolge aufweisen, und
der in einem spezifischen Takt für die Drehrate ermittelte Wert einem der mindestens zwei verschiedenen Arbeitspunkte des faseroptischen Gyroskops (10) zugeordnet wird.

14. Verfahren nach einem der Ansprüche 9 bis 10,
**dadurch gekennzeichnet, dass**
die mindestens zwei verschiedenen Werte für die Drehrate dadurch erhalten werden, dass mindestens zwei verschiedene Interferometerkennlinien des faseroptischen Gyroskops (10) durch eine entsprechende Steuerung von mindestens einem Element aus der Gruppe umfassend die Lichtquelle (11), die die optische Vorrichtung (13) mit dem Phasenmodulator (130), den Photodetektor (14) und den Verstärker (15) eingestellt werden.

15. Verfahren nach Anspruch 14,
**dadurch gekennzeichnet, dass**
die mindestens zwei verschiedenen Interferometerkennlinien des faseroptischen Gyroskops (10) durch mindestens zwei verschiedene Werte der Lichtquellenleistung eingestellt werden, wobei die Werte der Lichtquellenleistung in aufeinanderfolgenden Takten so eingestellt werden, dass diese Werte eine vorgegebene Abfolge aufweisen, und
der in einem spezifischen Takt für die Drehrate ermittelte Wert einer der mindestens zwei verschiedenen Interferometerkennlinien des faseroptischen Gyroskops (10) zugeordnet wird.

16. Verfahren nach Anspruch 14,
**dadurch gekennzeichnet, dass**
die mindestens zwei verschiedenen Interferometerkennlinien des faseroptischen Gyroskops (10) durch mindestens zwei verschiedene Werte der analogen Verstärkung des Verstärkers (15) eingestellt werden, wobei die Werte der Verstärkung in aufeinanderfolgenden Takten so eingestellt werden, dass diese Werte eine vorgegebene Abfolge aufweisen, und
der in einem spezifischen Takt für die Drehrate ermittelte Wert einer der mindestens zwei verschiedenen Interferometerkennlinien des faseroptischen Gyroskops (10) zugeordnet wird.

## Claims

1. A fiber optic system (1) comprising:
a fiber optic gyroscope (10) comprising:
a light source (11),
a fiber coil (12),
an optical device (13) comprising a phase modulator (130) and being configured to split a light beam coming from the light source (11) by means of beam splitting and to modulate the phase of at least one of the generated light beams to adjust a current working point of the fiber optic gyroscope (10), to irradiate the generated light beams in directions opposite to each other into the fiber coil (12), and to unify the light beams leaving the fiber coil (12),
a photo detector (14) that is configured to generate a signal corresponding to the light intensity of an interference signal generated due to the reunification of the light beams,
an amplifier (15) that is configured to amplify the signal generated in the photo detector (14), and
an evaluation unit (16) that is configured to generate by means of the signals generated by the amplifier (15) a modulation signal, which controls the phase modulator (130) such that a reset of the interference signal according to the current working point of the fiber optic gyroscope (10) is obtained or that a predetermined value is set as the current working point of the fiber optic gyroscope (10), and to determine based on the modulation signal a rotation rate of the fiber optic gyroscope (10), and
a control device (20) that is configured to control at least one element of the fiber optic gyroscope (10) such that at least two different values (Ω₁, Ω₂) for the rotation rate are determined by the evaluation unit (16) for almost constant rotation rate applied to the fiber optic gyroscope (10); wherein
the system comprises further a processing unit (30) that is configured to determine the size of the bias error (BF) of the fiber optic gyroscope (10) by comparison of the at least two determined values (Ω₁, Ω₂) for the rotation rate.

2. The fiber optic system according to claim 1,
**characterized in that**
the system comprises further a processing unit (30) that is configured to reduce the bias error (BF) of the fiber optic gyroscope (10) by a linear combination of the at least two determined values (Ω₁, Ω₂) for the rotation rate and to generate a corrected value (Ωₖ) for the rotation rate applied to the fiber optic gyroscope (10).

3. The fiber optic system according to one of claims 1 to 2,
**characterized in that**
the control device (20) is configured to control the evaluation unit (16) such that at least two different working points of the fiber optic gyroscope (10) are set by a corresponding control of the phase modulator (130).

4. The fiber optic system according to claim 3,
**characterized in that**
the evaluation unit (16) comprises:
a unit (63) for generating a dither amplitude that is suitable for setting at least two different values of the dither amplitude according to a signal of the control device (20),
a toggle control unit (65) that is configured to determine the values of the working points of the fiber optic gyroscope (10) in consecutive cycles and to control the values such that these values have a predetermined sequence, and
a toggle demultiplexer unit (67) that is configured to relate the values determined for the rotation rate in a specific cycle to one of the at least two different working points of the fiber optic gyroscope (10).

5. The fiber optic system according to claim 3,
**characterized in that**
the evaluation unit (16) comprises:
a unit (61) for generating a modulation deviation that is configured to set at least two different values of the modulation deviation according to a signal of the control device (20),
a toggle control unit (65) that is configured to determine the values of the working points of the fiber optic gyroscope (10) in consecutive cycles and to control the values such that these values have a predetermined sequence, and
a toggle demultiplexer unit (67) that is configured to relate the values determined for the rotation rate in a specific cycle to one of the at least two different working points of the fiber optic gyroscope.

6. The fiber optic system according to one of claims 1 to 2,
**characterized in that**
the control device (20) is configured to control at least one element of the group comprising the light source (11), the optical device (13) having the phase modulator (130), the photo detector (14), and the amplifier (15) such that at least two different interferometer characteristics of the fiber optic gyroscope (10) are obtained by an according control of the element.

7. The fiber optic system according to claim 6,
**characterized in that**
the control device (20) is configured to set at least two different powers of the light source (11),
the control device (20) comprises a toggle control unit (22) that is configured to determine the values of the light source power of the fiber optic gyroscope (10) in consecutive cycles and to control the values such that these values have a predetermined sequence, and
the evaluation unit (16) comprises a toggle demultiplexer unit (67) that is configured to relate the values determined for the rotation rate in a specific cycle to one of the at least two different interferometer characteristics of the fiber optic gyroscope (10).

8. The fiber optic system according to claim 6,
**characterized in that**
the control device (20) is configured to set at least two different analog amplifications of the amplifier (15),
the control device (20) comprises a toggle control unit (22) that is configured to determine the values of the analog amplification of the fiber optic gyroscope (10) in consecutive cycles and to control the values such that these values have a predetermined sequence, and
the evaluation unit (16) comprises a toggle demultiplexer unit (67) that is configured to relate the values determined for the rotation rate in a specific cycle to one of the at least two different interferometer characteristics of the fiber optic gyroscope (10).

9. A method for operating a fiber optic system (1) having a fiber optic gyroscope (10) comprising a light source (11), a fiber coil (12), an optical device (13) having a phase modulator (130), a photo detector (14), an amplifier (15) and an evaluation unit (16), in which
two light beams coming from the light source (11) and generated by the optical device (13) by means of beam splitting are irradiated in directions opposite to each other into the fiber coil (12) and are unified thereafter, wherein by means of the phase modulator (130) the phase of at least one of the generated light beams is modulated before it is irradiated into the fiber coil (12) to adjust a current working point of the fiber optic gyroscope (10),
the photo detector (14) receives the interference signal generated by reunification of the light beams, wherein a signal corresponding to the light intensity of the interference signal is generated by the photo detector (14),
the signal generated in the photo detector (14) is amplified in the amplifier (15),
by means of the signal generated by the amplifier (15) a modulation signal is generated in the evaluation unit (16), which controls the phase modulator (130) such that a reset of the interference signal according to the current working point of the fiber optic gyroscope (10) is achieved, and
based on the modulation signal a rotation rate of the fiber optic gyroscope (10) is determined in the evaluation unit (16),
the fiber optic gyroscope (10) is operated such that at least two different values (Ω₁, Ω₂) for the rotation rate are determined by the evaluation unit (16) for almost constant rotation rate applied to the fiber optic gyroscope (10), and
the size of the bias error (BF) of the fiber optic gyroscope (10) is determined by means of comparing the at least two determined values (Ω₁, Ω₂) for the rotation rate.

10. The method according to claim 9,
**characterized in that**
the bias error (BF) of the fiber optic gyroscope (10) is reduced by a linear combination of the at least two determined values (Ω₁, Ω₂) for the rotation rate and a corrected value (Ωₖ) for the rotation rate applied to the fiber optic gyroscope (10) is determined.

11. The method according to one of claims 9 to 10,
**characterized in that**
the at least two different values (Ω₁, Ω₂) for the rotation rate are obtained by setting at least two different working points of the fiber optic gyroscope (10) by using a corresponding control of the phase modulator (130).

12. The method according to claim 11,
**characterized in that**
the evaluation unit (16) comprises a unit (63) for generating a dither amplitude,
the at least two different working points of the fiber optic gyroscope (10) are set by at least two different values of the dither amplitude, wherein the values of the working points of the fiber optic gyroscope (10) are set in consecutive cycles such that these values have a predetermined sequence, and
the value determined for the rotation rate in a specific cycle is related to one of the at least two different working points of the fiber optic gyroscope (10).

13. The method according to claim 11,
**characterized in that**
the evaluation unit (16) comprises a unit (61) for generating a modulation deviation,
the at least two different working points of the fiber optic gyroscope (10) are set by at least two different values of the modulation deviation, wherein the values of the working points of the fiber optic gyroscope (10) in consecutive cycles are set such that these values have a predetermined sequence, and
the value determined for the rotation rate in a specific cycle is related to one of the at least two different working points of the fiber optic gyroscope (10).

14. The method according to one of claims 9 to 10,
**characterized in that**
the at least two different values for the rotation rate are obtained by obtaining at least two different interferometer characteristics of the fiber optic gyroscope (10) by a corresponding control of at least one element from the group comprising the light source (11), the optical device (13) having the phase modulator (130), the photo detector (14), and the amplifier (15).

15. The method according to claim 14,
**characterized in that**
the at least two different interferometer characteristics of the fiber optic gyroscope (10) are obtained by at least two different values of the light source power, wherein the values of the light source power in consecutive cycles are set such that these values have a predetermined sequence, and
the value determined in a specific cycle for the rotation rate is related to one of the at least two different interferometer characteristics of the fiber optic gyroscope (10).

16. The method according to claim 14,
**characterized in that**
the at least two different interferometer characteristics of the fiber optic gyroscope (10) are obtained by at least two different values for the analog amplification of the amplifier (15), wherein the values of the amplification in consecutive cycles are set such that these values have a predetermined sequence, and
the value determined for the rotation rate in a specific cycle is related to one of the at least two different interferometer characteristics of the fiber optic gyroscope (10).

## Revendications

1. Système à fibre optique (1) comprenant :
un gyroscope à fibre optique (10) qui comprend :
une source de lumière (11),
une bobine de fibre (12),
un dispositif optique (13), pourvu d'un modulateur de phase (130), qui est apte à séparer à l'aide d'une séparation de faisceau un faisceau de lumière provenant de la source de lumière (11), à moduler la phase de l'un au moins des faisceaux de lumière générés et à régler ainsi un point de fonctionnement actuel du gyroscope à fibre optique (10), à introduire dans des directions opposées dans la bobine de fibre (12) les faisceaux de lumière générés, et à réunir les faisceaux de lumière qui sortent de la bobine de fibre (12),
un photodétecteur (14) qui est apte à générer, à partir d'un signal d'interférence apparaissant lors de la réunion des faisceaux de lumière, un signal correspondant à l'intensité de lumière du signal d'interférence,
un amplificateur (15) qui est apte à amplifier le signal généré dans le photodétecteur (14), et
un dispositif d'analyse (16) qui est apte à générer à l'aide du signal généré par l'amplificateur (15) un signal de modulation qui commande le modulateur de phase (130) de telle sorte qu'une remise à l'état initial du signal d'interférence soit atteinte selon le point de fonctionnement actuel du gyroscope à fibre optique (10) ou qu'une valeur prédéfinie soit réglée comme point de fonctionnement actuel du gyroscope à fibre optique (10), et à définir, sur la base du signal de modulation, une vitesse de rotation du gyroscope à fibre optique (10), et
un dispositif de commande (20) qui est apte à commander au moins un élément du gyroscope à fibre optique (10) de telle sorte qu'au moins deux valeurs différentes (Ω₁, Ω₂) pour la vitesse de rotation soient déterminées par le dispositif d'analyse (16) en présence d'une vitesse de rotation à peu près égale appliquée au gyroscope à fibre optique (10),
le système comprenant également une unité de traitement (30) qui est apte à déterminer la grandeur de l'erreur de distorsion (BF) du gyroscope à fibre optique (10) en comparant les deux, ou plus, valeurs déterminées (Ω₁, Ω₂) pour la vitesse de rotation..

2. Système à fibre optique selon la revendication 1, **caractérisé en ce que** le système comprend également une unité de traitement (30) qui est apte à réduire l'erreur de distorsion (BF) du gyroscope à fibre optique (10) grâce à une combinaison linéaire des deux, ou plus, valeurs déterminées (Ω₁, Ω₂) pour la vitesse de rotation, et à générer une valeur corrigée (Ωₖ) pour la vitesse de rotation appliquée au gyroscope à fibre optique (10).

3. Système à fibre optique selon l'une des revendications 1 à 2, **caractérisé en ce que** le dispositif de commande (20) est apte à commander le dispositif d'analyse (16) de telle sorte qu'au moins deux points de fonctionnement différents du gyroscope à fibre optique (10) soient réglés grâce à une commande correspondante du modulateur de phase (130).

4. Système à fibre optique selon la revendication 3, **caractérisé en ce que** le dispositif d'analyse (16) comprend :
une unité (63) pour générer une amplitude dither, qui est apte à régler au moins deux valeurs différentes d'amplitude dither suivant un signal du dispositif de commande (20),
une unité de contrôle de basculement (65) qui est apte à définir les valeurs des points de fonctionnement du gyroscope à fibre optique (10) dans des cycles successifs et à les commander de telle sorte que ces valeurs présentent une succession prédéfinie, et
une unité de démultiplexage de basculement (67) qui est apte à affecter la valeur déterminée dans un cycle spécifique pour la vitesse de rotation à l'un des deux, ou plus, points de fonctionnement différents du gyroscope à fibre optique (10).

5. Système à fibre optique selon la revendication 3, **caractérisé en ce que** le dispositif d'analyse (16) comprend :
une unité (61) pour générer une course de modulation, qui est apte à régler au moins deux valeurs différentes de course de modulation suivant un signal du dispositif de commande (20),
une unité de contrôle de basculement (65) qui est apte à définir les valeurs des points de fonctionnement du gyroscope à fibre optique (10) dans des cycles successifs et à les commander de telle sorte que ces valeurs présentent une succession prédéfinie, et
une unité de démultiplexage de basculement (67) qui est apte à affecter la valeur déterminée dans un cycle spécifique pour la vitesse de rotation à l'un des deux, ou plus, points de fonctionnement différents du gyroscope à fibre optique.

6. Système à fibre optique selon l'une des revendications 1 à 2, **caractérisé en ce que** le dispositif de commande (20) est apte à commander au moins un élément du groupe comprenant la source de lumière (11), le dispositif optique (13) avec le modulateur de phase (130), le photodétecteur (14) et l'amplificateur (15) de telle sorte qu'au moins deux courbes caractéristiques d'interféromètre différentes du gyroscope à fibre optique (10) soient réglées par une commande correspondante de l'élément.

7. Système à fibre optique selon la revendication 6, **caractérisé en ce que**
le dispositif de commande (20) est apte à régler au moins deux puissances différentes de la source de lumière (11),
le dispositif de commande (20) comprend une unité de contrôle de basculement (22) qui est apte à définir les valeurs de la puissance de source de lumière du gyroscope à fibre optique (10) dans des cycles successifs et à les commander de telle sorte que ces valeurs présentent une succession prédéfinie, et
le dispositif d'analyse (16) comprend une unité de démultiplexage de basculement (67) qui est apte à affecter la valeur déterminée dans un cycle spécifique pour la vitesse de rotation à l'une des deux, ou plus, courbes caractéristiques d'interféromètre différentes du gyroscope à fibre optique (10).

8. Système à fibre optique selon la revendication 6, **caractérisé en ce que**
le dispositif de commande (20) est apte à régler au moins deux amplifications analogiques différentes de l'amplificateur (15),
le dispositif de commande (20) comprend une unité de contrôle de basculement (22) qui est apte à définir les valeurs de l'amplification analogique du gyroscope à fibre optique (10) dans des cycles successifs et à les commander de telle sorte que ces valeurs présentent une succession prédéfinie, et
le dispositif d'analyse (16) comprend une unité de démultiplexage de basculement (67) qui est apte à affecter la valeur déterminée dans un cycle spécifique pour la vitesse de rotation à l'une des deux, ou plus, courbes caractéristiques d'interféromètre différentes du gyroscope à fibre optique (10).

9. Procédé pour faire fonctionner un système à fibre optique (1) avec un gyroscope à fibre optique (10) qui comprend une source de lumière (11), une bobine de fibre (12), un dispositif optique (13) pourvu d'un modulateur de phase (130), un photodétecteur (14), un amplificateur (15) et un dispositif d'analyse (16), selon lequel
deux faisceaux de lumière qui proviennent de la source de lumière (11) et qui sont générés par séparation de faisceau par le dispositif optique (13) sont introduits dans des directions opposées dans la bobine de fibre (12) et sont ensuite réunis, la phase de l'un au moins des faisceaux de lumière générés étant modulée à l'aide du modulateur de phase (130) avant l'introduction dans la bobine de phase (12), et un point de fonctionnement actuel du gyroscope à fibre optique (10) étant ainsi réglé,
le photodétecteur (14) est soumis au signal d'interférence qui résulte de la réunion des faisceaux de lumière, un signal qui correspond à l'intensité de lumière dudit signal d'interférence étant généré par le photodétecteur (14),
le signal généré dans le photodétecteur (14) est amplifié dans l'amplificateur (15),
à l'aide du signal généré par l'amplificateur (15), un signal de modulation est généré dans le dispositif d'analyse (16), lequel signal de modulation commande le modulateur de phase (130) de telle sorte qu'une remise à l'état initial du signal d'interférence soit atteinte selon le point de fonctionnement actuel du gyroscope à fibre optique (10), et
sur la base du signal de modulation, une vitesse de rotation du gyroscope à fibre optique (10) est définie dans le dispositif d'analyse (16),
le gyroscope à fibre optique (10) fonctionnant de telle sorte qu'au moins deux valeurs différentes (Ω₁, Ω₂) pour la vitesse de rotation soient déterminées par le dispositif d'analyse (16) en présence d'une vitesse de rotation à peu près égale appliquée au gyroscope à fibre optique (10), et
la grandeur de l'erreur de distorsion (BF) du gyroscope à fibre optique (10) est déterminée grâce à la comparaison des deux, ou plus, valeurs déterminées (Ω₁, Ω₂) pour la vitesse de rotation.

10. Procédé selon la revendication 9, **caractérisé en ce que** l'erreur de distorsion (BF) du gyroscope à fibre optique (10) est réduite par une combinaison linéaire des deux, ou plus, valeurs déterminées (Ω₁, Ω₂) pour la vitesse de rotation, et une valeur corrigée (Qₖ) est générée pour la vitesse de rotation appliquée au gyroscope à fibre optique (10).

11. Procédé selon l'une des revendications 9 à 10, **caractérisé en ce que** les deux, ou plus, valeurs différentes (Ω₁, Ω₂) pour la vitesse de rotation sont obtenues grâce au fait qu'au moins deux points de fonctionnement différents du gyroscope à fibre optique (10) sont réglés par une commande correspondante du modulateur de phase (130).

12. Procédé selon la revendication 11, **caractérisé en ce que**
le dispositif d'analyse (16) comprend une unité (63) pour générer une amplitude dither,
les deux, ou plus, points de fonctionnement différents du gyroscope à fibre optique (10) sont réglés grâce à au moins deux valeurs différentes d'amplitude dither, les valeurs des points de fonctionnement du gyroscope à fibre optique (10) étant réglées dans des cycles successifs de telle sorte que ces valeurs présentent une succession prédéfinie, et
la valeur déterminée dans un cycle spécifique pour la vitesse de rotation étant affectée à l'un des deux, ou plus, points de fonctionnement différents du gyroscope à fibre optique (10).

13. Procédé selon la revendication 11, **caractérisé en ce que**
le dispositif d'analyse (16) comprend une unité (61) pour générer une course de modulation,
les deux, ou plus, points de fonctionnement différents du gyroscope à fibre optique (10) sont réglés par au moins deux valeurs différentes de course de modulation, les valeurs des points de fonctionnement du gyroscope à fibre optique (10) étant réglées dans des cycles successifs de telle sorte que ces valeurs présentent une succession prédéfinie, et
la valeur déterminée dans un cycle spécifique pour la vitesse de rotation étant affectée à l'un des deux, ou plus, points de fonctionnement différents du gyroscope à fibre optique (10).

14. Procédé selon l'une des revendications 9 à 10, **caractérisé en ce que**
les deux, ou plus, valeurs différentes pour la vitesse de rotation sont obtenues grâce au fait qu'au moins deux courbes caractéristiques d'interféromètre différentes du gyroscope à fibre optique (10) sont réglées par une commande correspondante d'au moins un élément du groupe comprenant la source de lumière (11), le dispositif optique (13) avec le modulateur de phase (130), le photodétecteur (14) et l'amplificateur (15).

15. Procédé selon la revendication 14, **caractérisé en ce que**
les deux, ou plus, courbes caractéristiques d'interféromètre différentes du gyroscope à fibre optique (10) sont réglées par au moins deux valeurs différentes de puissance de source de lumière, les valeurs de la puissance de source de lumière étant réglées dans des cycles successifs de telle sorte que ces valeurs présentent une succession prédéfinie, et
la valeur déterminée dans un cycle spécifique pour la vitesse de rotation est affectée à l'une des deux, ou plus, courbes caractéristiques d'interféromètre différentes du gyroscope à fibre optique (10).

16. Procédé selon la revendication 14, **caractérisé en ce que**
les deux, ou plus, courbes caractéristiques d'interféromètre différentes du gyroscope à fibre optique (10) sont réglées par au moins deux valeurs différentes d'amplification analogique de l'amplificateur (15), les valeurs d'amplification étant réglées dans des cycles successifs de telle sorte que ces valeurs présentent une succession prédéfinie, et
la valeur déterminée dans un cycle spécifique pour la vitesse de rotation est affectée à l'une des deux, ou plus, courbes caractéristiques d'interféromètre différentes du gyroscope à fibre optique (10).
